Europäisches Patentamt

European Patent Office

Office européen des brevets

(19)

(11) Numéro de publication : **0 502 757 A1**

(12) # DEMANDE DE BREVET EUROPEEN

(21) Numéro de dépôt : **92400476.5**

(22) Date de dépôt : **25.02.92**

(51) Int. Cl.⁵ : **E21B 49/00, E21B 47/00, G01V 3/38, G01N 27/04**

(30) Priorité : **26.02.91 FR 9102267**

(43) Date de publication de la demande :
**09.09.92 Bulletin 92/37**

(84) Etats contractants désignés :
**DE GB NL**

(71) Demandeur : **SCHLUMBERGER LIMITED**
**277 Park Avenue**
**New York, N.Y. 10172 (US)**

(71) Demandeur : **SCHLUMBERGER HOLDINGS LIMITED**
**P.O. Box 71, Craigmuir Chambers**
**Road Town, Tortola (VG)**

(71) Demandeur : **SCHLUMBERGER TECHNOLOGY B.V.**
**Carnegielaan 12**
**NL-2517 KM Den Haag (NL)**

(72) Inventeur : **Delhomme, Jean-Pierre**
**20, avenue des Mimosas**
**F-92100 Boulogne Billancourt (FR)**
Inventeur : **Rivest, Jean-François**
**147, rue Saint-Merri**
**F-77300 Fontainebleau (FR)**

(74) Mandataire : **Hagel, Francis et al**
**Etudes et Productions Schlumberger A**
**L'ATTENTION DU SERVICE BREVETS 26, rue**
**de la Cavée B.P. 202**
**F-92142 Clamart Cédex (FR)**

(54) **Procédé pour caractériser les hétérogénéités de texture de formations géologiques traversées par un forage.**

(57) L'invention concerne un procédé pour caractériser, du point de vue des hétérogénéités de texture, une formation géologique traversée par un forage.

A partir d'une image de la paroi du forage représentative des variations d'un paramètre physique de la formation suivant la direction longitudinale du forage et suivant la périphérie de la paroi, telle que l'image fournie par le dispositif FMS (Formation Microscanner) de Schlumberger, on extrait des objets géologiques correspondant à une hétérogénéité d'un type morphologique déterminé, et on détermine la variation, suivant la direction longitudinale du forage, d'au moins un attribut défini pour ce type d'hétérogénéité.

Application à la détection des vacuoles.

Figure 4

EP 0 502 757 A1

Jouve, 18, rue Saint-Denis, 75001 PARIS

L'invention concerne l'étude des formations géologiques traversées par un forage, et plus particulièrement un procédé permettant de caractériser les hétérogénéités de texture des formations.

Il est connu que les hétérogénéités de texture des roches (vacuoles, nodules etc) constituent un facteur ayant une influence sur la porosité et la perméabilité des formations. Ces paramètres, dans les réservoirs d'hydrocarbures, sont déterminants pour évaluer le potentiel de production. Il est donc important de pouvoir caractériser ces hétérogénéités.

L'invention a pour objet un procédé permettant de caractériser ces hétérogénéités.

Le procédé de l'invention se caractérise, dans son principe, par le fait qu'il repose sur un traitement automatique d'une image de la paroi du forage. Une telle image est disponible, avec une résolution inférieure au centimètre, depuis l'introduction du dispositif FMS (Formation Microscanner) de Schlumberger. Ce dispositif fournit une image électrique de la paroi d'un forage, c'est-à-dire une image dans laquelle l'intensité est fonction de la résistivité de la formation.

Selon l'invention, à partir d'une image de la paroi du forage représentative des variations d'un paramètre physique de la formation suivant la direction longitudinale du forage et suivant la périphérie de la paroi, on extrait des objets géologiques correspondant à une hétérogénéité d'un type morphologique déterminé, et on détermine la variation, suivant la direction longitudinale du forage, d'au moins un attribut défini pour ce type d'hétérogénéité.

Le procédé selon l'invention est avantageusement applicable à la détection des vacuoles.

Différents attributs peuvent être envisagés, seuls ou avantageusement en combinaison : la proportion de la surface de l'image occupée par les vacuoles, la surface moyenne des vacuoles, et le degré de liaison entre vacuoles.

L'invention sera bien comprise à la lecture de la description qui va suivre, faite en se référant aux dessins annexés. Dans les dessins :

– la figure 1A est une image de la paroi d'un forage, obtenue au moyen d'un dispositif FMS;

– les figures 1B à 1E illustrent les résultats obtenus lors des étapes successives de traitement, dans la première partie du traitement;

– les figures 2A à 2D illustrent les étapes de la deuxième partie du traitement conduisant à la mise en évidence des vacuoles, la figure 2A reproduisant l'image de la figure 1A pour plus de clarté;

– les figures 3A à 3D illustrent les étapes du traitement qui conduit à la mise en évidence des connexions entre vacuoles, la figure 3A reproduisant l'image de la figure 1A;

– la figure 4 illustre la représentation graphique des attributs calculés à partir des traitements précédents.

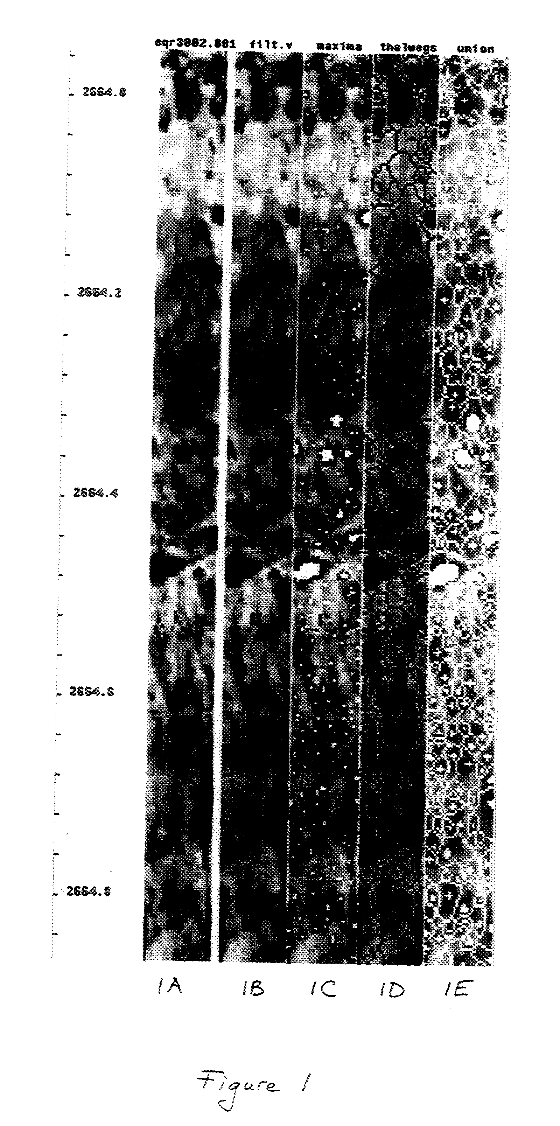

La figure 1A représente la paroi d'un forage sur une longueur d'environ 80 centimètres et est obtenue au moyen d'un dispositif FMS (Formation Microscanner) de Schlumberger. Ce dispositif comporte des patins munis chacun d'un réseau dense d'électrodes, la dimension des électrodes et la distance entre électrodes adjacentes étant de l'ordre du centimètre ou moins. Pendant l'opération de mesure, effectuée en remontant le dispositif vers la surface à l'aide d'un câble, les patins sont appliqués contre des secteurs respectifs de la paroi du forage. Les courants émis par les électrodes sont représentatifs de la résistivité de la formation en regard de l'électrode considérée. L'ensemble des mesures fournies par les électrodes d'un patin sont combinées pour produire une image électrique de la paroi du forage, selon une échelle de gris : le noir correspond à une faible résistivité, le blanc à une résistivité élevée. La dimension latérale de l'image correspond à la direction circonférentielle du forage, et est limitée par le secteur angulaire couvert par le réseau d'électrodes.

Les étapes de traitement d'image décrites ci-après utilisent des opérateurs qui reposent sur des principes de morphologie mathématique, et qui permettent de simplifier une image tout en préservant ses caractéristiques morphologiques essentielles. Les opérateurs en question sont décrits dans la littérature et il n'est pas nécessaire de les exposer en détail. Les références utilisées dans la présente description sont : Serra, J. Image Analysis and Mathematical Morphology, Academic Press, London, 1982 (ci-après "Serra"), et Meyer, F. et Beucher, S. "Morphological Segmentation" Journal of Visual Communication and Image Representation, Vol.1, N°1, pp.21-46, Septembre 1990 (ci-après "Meyer et al").

Dans ce qui suit, on utilisera pour caractériser les composantes de l'image une métaphore topographique : les points de l'image ayant les valeurs les plus élevées de conductivité sont appelés les sommets, les trajets reliant des zones de valeur élevée sont appelées lignes de crête, ceux reliant des zones de valeur basse sont les lignes de thalweg. Enfin, on utilise la notion de "ligne des partage des eaux" (en anglais divide) pour désigner la frontière entre des zones appelées "bassins versants" (en anglais watershed) à l'intérieur desquelles tout chemin descendant converge vers un même point bas (sink).

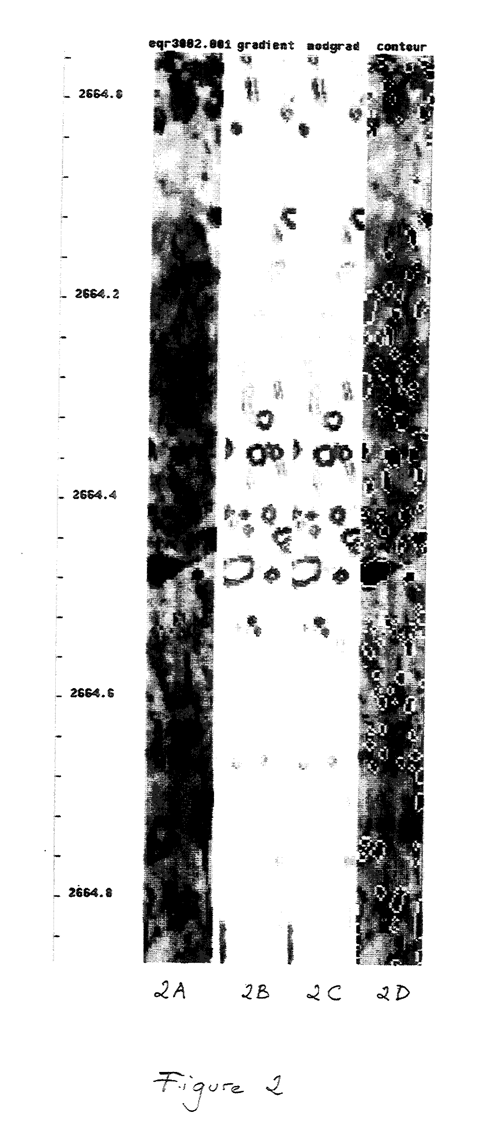

L'image de la figure 1A présente des zones sombres (très conductives) correspondant à des vacuoles. Les opérations illustrées par les figures 1B à 1E et 2B à ED permettent d'extraire de l'image de départ les zones correspondant effectivement à des vacuoles. Le principe du traitement consiste à "marquer" sur l'image d'une part les objets dont la morphologie correspond à une vacuole (zone fermée de forte conductivité) et d'autre part les zones de faible conductivité, et à définir les contours des vacuoles comme les lignes de plus fort contraste entre les deux.

L'image de départ subit d'abord un filtrage destiné à éliminer le bruit. Un type de filtrage approprié utilise l'opérateur de fermeture morphologique (cf. Serra), l'élément structurant étant un losange de taille 1. L'image filtrée est représentée à la figure 1B.

Ensuite, on effectue un marquage des sommets. Ce marquage est réalisé de manière appropriée par une technique de reconstruction morphologique (cf. Meyer et al), qui permet d'extraire les zones de valeur élevée. La figure 1C montre le résultat de cette opération sous la forme d'une superposition des zones marquées, indiquées en blanc, sur l'image de la figure 1B.

L'étape illustrée par la figure 1D est effectuée en parallèle avec le marquage des sommets. Il s'agit de marquer les lignes de thalweg (zones de faible conductivité). Cela est réalisé de façon appropriée en inversant l'image de la figure 1B, les valeurs élevées correspondant alors aux faibles conductivités, et en appliquant à l'image inversée l'opérateur qui fournit les lignes de partage des eaux (cf. Meyer et al). Le réseau de lignes obtenu est figuré en noir, superposé sur l'image de la figure 1B.

L'étape qui suit, illustrée par la figure 1E, réalise l'union des objets marqués : sommets et lignes de thalweg. La figure 1E montre ainsi la superposition, sur l'image de la figure 1B, des sommets représentés à la figure 1C et des lignes de thalweg représentés à la figure 1D. Cette union est réalisée en respectant une condition, à savoir éviter tout contact entre, d'une part, les sommets et d'autre part, les lignes de thalweg. Pour cette étape, on procède comme suit : on effectue une dilatation (cf. Serra) de l'image formée de l'ensemble des sommets, on effectue une dilatation de l'image formée de l'ensemble des lignes de thalweg, on inverse l'image des thalwegs ainsi dilatée, et on réalise l'intersection de cette image inversée avec l'image des sommets dilatée.

Parallèlement à cette première partie du traitement, on produit à partir de l'image de la figure 1A, reproduite à l'identique à la figure 2A, une image des gradients, représentée à la figure 2B. Un opérateur approprié est le gradient morphologique, qui fournit le module du gradient en chaque point (cf. Serra). L'opérateur effectue en parallèle une dilatation et une érosion de l'image de départ, avec comme élément structurant le losange de taille 1, et soustrait l'une de l'autre les images obtenues.

Ensuite, on modifie l'image des gradients au moyen de l'image binaire d'union des sommets et des thalwegs de la figure 1E, afin d'éliminer des minimas sans signification. Pour ce faire, on effectue une opération de reconstruction duale (cf. Meyer et al) entre, d'une part, l'image des gradients, et d'autre part, une image obtenue à partir de l'image binaire d'union : les points de valeur 1 étant transformés en points de valeur 0, et les points de valeur 0 prenant une valeur supérieure au maximum des valeurs de gradient. L'image obtenue est représentée à la figure 2C.

L'étape qui suit utilise l'image des gradients ainsi modifiée dans une opération de détermination des lignes de partage des eaux (cf. Meyer et al), afin de définir les limites entre les objets marqués par les sommets d'une part et les lignes de thalweg d'autre part. Cela permet de déterminer les contours des vacuoles, comme l'illustre la figure 2D.

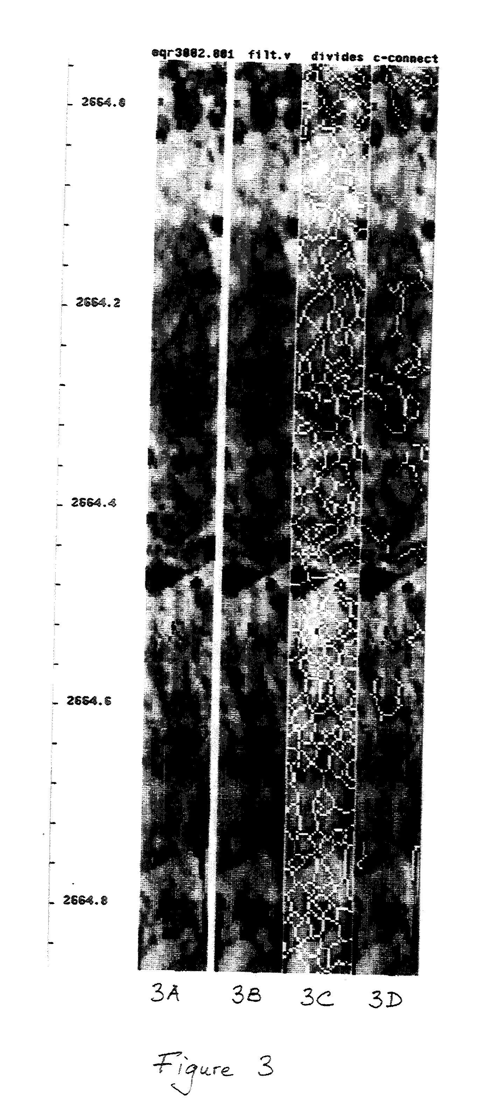

Les figures 3A à 3D illustrent un autre traitement, permettant d'extraire de l'image les liaisons entre vacuoles.

La figure 3A reproduit la figure 1A, et montre par conséquent l'image de départ. La figure 3B, identique à la figure 1B, montre l'image filtrée comme décrit plus haut. On applique à l'image filtrée l'opérateur fournissant les lignes de partage des eaux. Le réseau de lignes ainsi marqué est représenté en blanc sur la figure 3C, superposé à l'image de la figure 3B. Pour ne conserver de cette image que les liaisons entre vacuoles, on élimine les arcs ayant une valeur de conductivité inférieure à un seuil déterminé, lequel peut être défini de manière adaptative. L'image qui en résulte est représentée à la figure 3D.

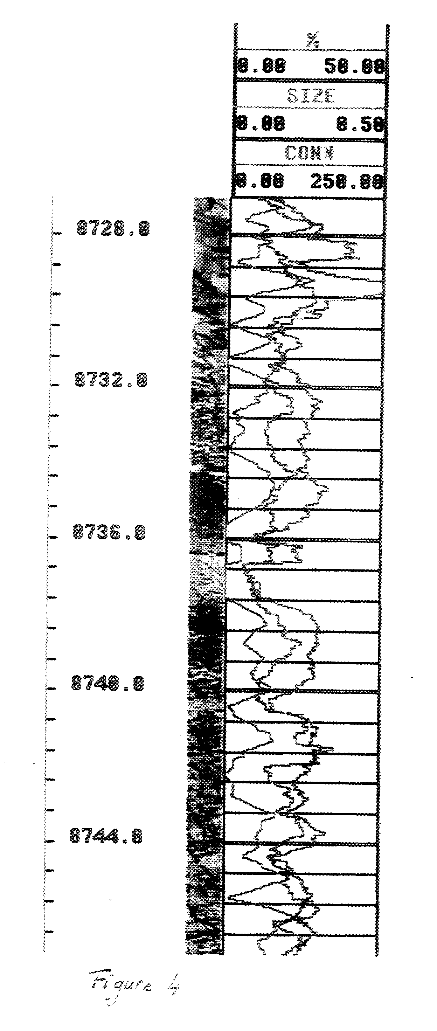

La figure 4 illustre comment les images des figures 2D et 3D peuvent être utilisées pour obtenir une présentation graphique, selon la direction longitudinale du forage, d'attributs caractérisant les hétérogénéités de texture des formations géologiques. Les graphiques (diagraphies) présentés sur la figure 4 correspondent aux attributs ci-après :

% = pourcentage de vacuoles (proportion de la surface occupée par les vacuoles par rapport à la surface de l'image)

SIZE = dimension moyenne des vacuoles

CONN = degré de liaison entre vacuoles (défini comme la moyenne des valeurs de conductivité sur les points appartenant aux liaisons entre vacuoles, tel qu'illustré à la figure 3D.

Il est à noter que l'invention est applicable à la détection d'autres objets que les vacuoles. Par exemple, le procédé décrit pourrait, moyennant des inversions, être utilisé pour la détection d'inclusions de résistivité élevée (nodules, galets).

De plus, l'invention n'est pas limitée à l'utilisation d'une image électrique de la paroi du forage. Des images obtenues par la mesure d'autres paramètres physiques pourraient être utilisées dans le cadre de l'invention, pourvu qu'elles présentent une résolution appropriée.

## Revendications

1. Procédé pour caractériser, du point de vue des hétérogénéités de texture, une formation géologique traversée par un forage, caractérisé par le fait qu'à partir d'une image de la paroi du forage représentative des variations d'un paramètre physique de la formation suivant la direction longitudinale du forage et suivant la périphérie de la paroi, on extrait des objets géologiques correspondant à une hétérogénéité d'un type morphologique déterminé, et on détermine la variation, suivant la direction longitudinale du forage, d'au moins un attribut défini pour ce type d'hétérogénéité.

2. Procédé selon la revendication 1, dans lequel, pour extraire les dits objets, on marque les objets présentant une valeur élevée du dit paramètre ou d'une grandeur qui en dérive, on marque les objets présentant une valeur basse du dit paramètre ou de la dite grandeur en dérivant, et on détermine les contours des objets en fonction des valeurs de gradient du dit paramètre.

3. Procédé selon l'une des revendications 1 et 2, dans lequel on extrait de l'image, en tant qu'objet géologique, les vacuoles.

4. Procédé selon la revendication 3, dans lequel on utilise en tant qu'attribut la proportion de la surface de l'image occupée par les vacuoles.

5. Procédé selon l'une des revendications 3 et 4, dans lequel on utilise en tant qu'attribut la surface moyenne des vacuoles.

6. Procédé selon l'une des revendications 3 à 5, dans lequel on extrait en outre de l'image les lignes de liaison entre vacuoles.

7. Procédé selon la revendication 6, dans lequel on utilise en tant qu'attribut la moyenne des valeurs du dit paramètre dans les lignes de liaison entre vacuoles.

Figure 1

Figure 2

Figure 3

Figure 4

EP 0 502 757 A1

**Office européen des brevets**

# RAPPORT DE RECHERCHE EUROPEENNE

Numero de la demande

EP 92 40 0476

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | EP-A-0 110 750 (SOCIETE DE PROSPECTION ELECTRIQUE SCHLUMBERGER) * page 4, ligne 23 - page 7, ligne 5; revendication 1 * | 1,3 | E21B49/00 E21B47/00 G01V3/38 G01N27/04 |
| Y | --- | 2,4,5 | |
| D,Y | J. SERRA 'IMAGE ANALYSIS AND MATHEMATICAL MORPHOLOGY' 1982 , ACADEMIC PRESS INC LTD. , LONDON PAGES 434-463 * page 458, alinéa F.1.; figures XII.18-XII.19 * | 2,4,5 | |
| X | FR-A-2 647 570 (CLOT ANDRE) * page 1, ligne 1 - page 2, ligne 35; revendications * | 1 | |
| A | --- | 3,6 | |
| A | EP-A-0 159 944 (SOCIETE DE PROSPECTION ELECTRIQUE SCHLUMBERGER) * page 5, ligne 1 - page 6, ligne 17 * | 1,3 | |

**DOMAINES TECHNIQUES RECHERCHES (Int. Cl.5 )**

E21B
G01V
G01N

Le présent rapport a été établi pour toutes les revendications

| Lieu de la recherche | Date d'achèvement de la recherche | Examinateur |
|---|---|---|
| LA HAYE | 03 JUIN 1992 | LINGUA D.G. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

9